Europäisches Patentamt

European Patent Office

Office européen des brevets

(11) Numéro de publication: **0 292 355**
**A1**

## (12) DEMANDE DE BREVET EUROPEEN

(21) Numéro de dépôt: 88401116.4

(22) Date de dépôt: 06.05.88

(51) Int. Cl.4: **H 04 M 11/08**

(30) Priorité: 19.05.87 FR 8706961

(43) Date de publication de la demande:
23.11.88 Bulletin 88/47

(84) Etats contractants désignés:
AT BE CH DE ES FR GB GR IT LI LU NL SE

(71) Demandeur: **JS TELECOMMUNICATIONS**
**31, 32, quai de Dion Bouton**
**F-92811 Puteaux Cédex (FR)**

(72) Inventeur: **Ménard, Daniel**
**35, rue Marius Jacotot**
**F-92800 Puteaux (FR)**

(54) **Procédé d'échange de données selon deux formats entre un centre serveur et un terminal, et centre serveur pour la mise en oeuvre du procédé.**

(57) L'invention concerne un procédé d'échange de données entre un terminal comprenant un premier et un second périphériques de type différent (22, 24) et un centre serveur (10) comprenant un premier et un second ensembles de ressources d'accès de type différent (16, 18), les deux périphériques et les deux ensembles de ressources fonctionnant respectivement sous un premier et un second formats de données différents, et dans lequel :
- on établit une communication, via une ligne d'un réseau commuté (30), entre le premier périphérique (22) et une ressource (16) du premier ensemble,
- on échange des données selon le premier format entre le premier périphérique et la ressource du premier ensemble,
- on établit la communication entre le second périphérique (24) du terminal et une ressource (18) du second ensemble du centre serveur,
- on adapte les modalités d'échange de données entre le second périphérique (24) et la ressource du second ensemble (18), et
- on échange des données selon le second format entre le second périphérique (24) et la ressource du second ensemble (18).
Selon l'invention l'étape d'établissement de la communication est effectuée par composition et envoi sur la ligne d'un numéro d'appel pour appeler une ressource du second ensemble (18) et, après connexion au réseau commuté (30) de la ressource du second ensemble (18), par composition et envoi sur la ligne d'un numéro de commande pour connecter la ligne sur la ressource du second ensemble (18).

FIG.1

## Description

La présente invention concerne d'une façon générale l'échange d'informations entre un terminal et un centre serveur, tel qu'un serveur de messagerie, et concerne plus particulièrement un procédé d'échange de données entre un terminal comprenant un premier et un second périphériques de type différent et un centre serveur comprenant un premier et un second ensembles de ressources d'accès de type différent, les deux périphériques et les deux ensembles de ressources fonctionnant respectivement sous un premier et un second formats de données différents, et dans lequel :

- on établit une communication, via une ligne d'un réseau commuté, entre le premier périphérique et une ressource du premier ensemble,
- on échange des données selon le premier format entre le premier périphérique et la ressource du premier ensemble,
- on établit la communication entre le second périphérique du terminal et une ressource du second ensemble du centre serveur,
- on adapte les modalités d'échange de données entre le second périphérique et la ressource du second ensemble et
- on échange des données selon le second format entre le second périphérique et ladite ressource du second ensemble.

L'invention concerne également un centre serveur équipé de ressources de deux types différents pour la mise en oeuvre du procédé.

Le procédé tel que présenté ci-dessus est connu par la demande de brevet français publiée n° 2 528 998.

En pratique, le premier périphérique sera un écran-clavier du type "terminal-annuaire", le format de données associé répondant à la norme dite "videotex", et le second périphérique sera avantageusement un télécopieur, avec un format de données correspondant qui est différent de la norme "videotex", et qui est défini par diverses normes à l'échelon international.

De façon correspondante, chaque ressource du premier type comprendra alors un modem de type "videotex" et une unité de gestion du protocole "videotex", tandis que chaque ressource du second type comprendra un modem de type télécopie et une unité de gestion du protocole télécopie, pouvant par exemple opérer en mode "télécopieur virtuel".

Dans la demande de brevet sus-mentionnée, le transfert de la communication, côté serveur, entre les deux types de ressources, s'effectue à l'aide d'un circuit commutateur qui est relié d'une part, aux deux ressources qui sont donc biunivoquement associées et, d'autre part, à la ligne (ordinaire ou spécialisée), par un simple basculement effectué sur commande entre l'une et l'autre des ressources associées. Cela signifie que, par exemple pendant qu'un échange de données a lieu sous le format de données "télécopie" et occupe la ressource correspondante, l'autre ressource, constituant potentiellement un accès au centre serveur, est bloquée et inutilisée.

Ainsi, dans le cas d'un centre serveur équipé de 2N ressources (N "vidéotex" et N "télécopie"), N de ces ressources sont en permanence inutilisables.

La présente invention a pour objet un procédé d'échange de données qui permette une meilleure gestion des ressources d'accès au centre serveur.

En particulier, l'invention vise à allouer les ressources d'une manière plus souple en fonction des exigences, ainsi qu'à permettre une adaptation des ressources dans les cas de déséquilibres importants dans les trafics sous les deux formats, tout ceci pouvant être effectué dynamiquement.

A cet effet, le procédé tel que présenté plus haut est caractéri sé, selon l'invention, en ce que l'étape d'établissement de la communication est effectuée par composition et envoi sur la ligne du réseau commuté d'un numéro d'appel pour appeler une ressource du second ensemble et, après connexion de la ressource du second ensemble au réseau commuté, par composition et envoi sur ladite ligne d'un numéro de commande pour connecter la ligne sur la ressource du second ensemble.

De façon appropriée, on utilisera le principe du double appel, le numéro de commande consistant soit en un suffixe dit de transfert, auquel cas la ressource du premier ensemble effectuant l'appel est déconnectée dès que la communication avec la ressource du second ensemble est établie, soit en un suffixe dit de conférence, auquel cas la ressource du premier ensemble reste connectée même après que la communication avec la ressource du second type ait été établie, et reprend ainsi la main lorsque la ressource du second ensemble ferme la communication (signal de raccrochage).

L'invention concerne également un centre serveur pour la mise en oeuvre du procédé. Selon l'invention, le centre serveur est caractérisé en ce que toutes les ressources sont reliées individuellement au réseau et en ce qu'au moins les ressources du premier ensemble comprennent des moyens numéroteurs susceptibles d'envoyer sur le réseau un numéro d'appel d'une ressource de l'autre type et un numéro de commande pour connecter la ligne sur cette dernière.

L'Homme de l'Art aura compris que le mot "ressource" désigne toute entité nécessaire au fonctionnement d'un processus, tandis que le mot "modem" désigne un modulateur-démodulateur.

L'invention sera mieux comprise à la lecture de la description détaillée suivante de formes de réalisation préférées de celle-ci, donnée à titre d'exemple et faite en référence aux dessins annexés, sur lesquels :

- la figure 1 est un diagramme synoptique d'ensemble d'une partie d'une installation dans laquelle est mis en oeuvre le procédé selon la présente invention,
- la figure 2 est un schéma plus détaillé de la partie "terminal" de la figure 1, et
- la figure 3 est un schéma plus détaillé de la partie "centre serveur" de la figure 1.

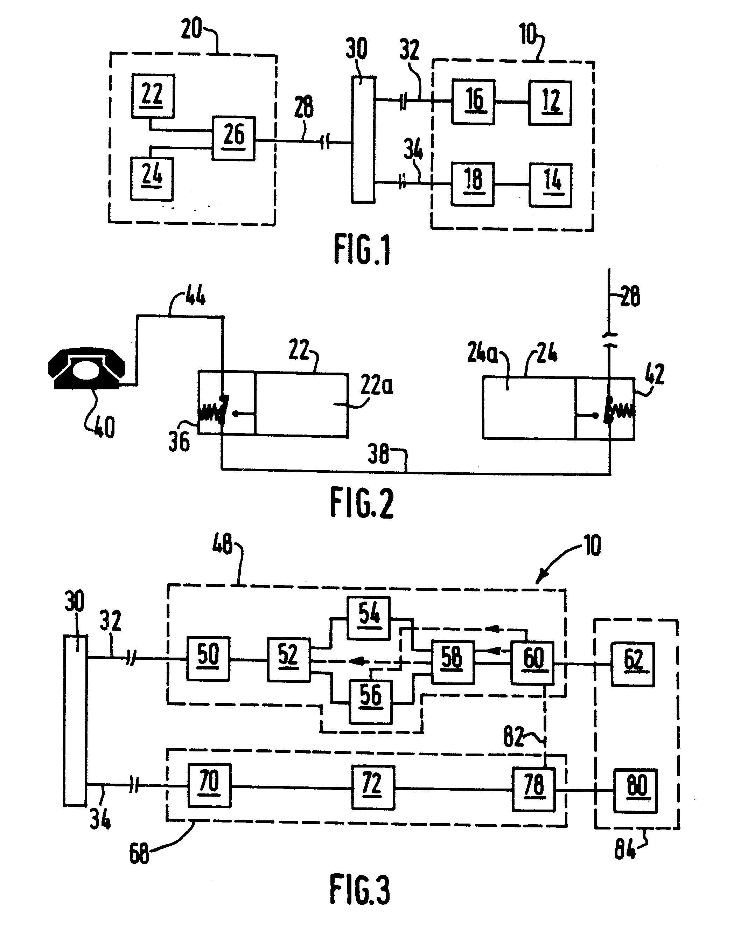

En référence à la figure 1, une installation pour la mise en oeuvre de l'invention comprend un centre serveur 10 constitué de deux banques de données distinctes 12, 14, contenant des informations codées selon des formats différents. A la banque de données 12 est reliée une pluralité de ressources d'accès au format correspondant, une seule étant représentée en 16, et de même, à la banque de données 14 est reliée une pluralité de ressources d'accès au format correspondant, dont une est représentée en 18. Typiquement, une ressource comprendra, comme on le verra plus loin, un modulateur-démodulateur, ainsi qu'une unité de gestion du protocole de dialogue, d'échange de données et de contrôle associé au format de données considéré.

Un terminal d'abonné, globalement désigné par la référence 20, comprend un premier périphérique 22, qui sera avantageusement un écran-clavier du type terminal-annuaire (connu sous la marque "Minitel"), et un second périphérique 24, typiquement un télécopieur du groupe II ou III. Un dispositif de commutation 26 permet la connexion alternée de l'un et l'autre des deux périphériques à une ligne 28, qui est dans le présent exemple une ligne ordinaire d'abonné du réseau téléphonique commuté, indiqué en 30. On peut observer par ailleurs que chacune des deux ressources 16, 18 du centre serveur, respectivement adaptée aux normes de transmission "videotex" et "télécopie", est reliée par une ligne individuelle, respectivement 32, 34, au réseau commuté 30, tout comme les autres ressources non représentées du centre serveur 10.

Conformément à l'invention, les deux banques de données 12 et 14 du centre serveur 10 sont gérées de manière associative, c'est-à-dire qu'il existe des corrélations entre les données de type télécopie (données graphiques) contenues dans la banque de données 14 et les données de type "vidéotex" contenues dans la banque de données 12.

A titre d'exemple, le centre serveur 10 pourra être un serveur de messagerie pour transmission de télécopies entre abonnés, la banque de données 14 contenant, pour un abonné émetteur donné, les données graphiques de la ou des pages à envoyer, et la banque de données 12 contenant, en association, la liste des coordonnées, sur le réseau commuté, des destinataires de ladite ou desdites pages, entre autres.

Les circuits nécessaires à ce type de fonctionnement sont bien connus de l'homme de l'art, et ne seront pas décrits ici plus en détail.

Une forme de réalisation possible du terminal d'abonné 20 est représentée sous une forme plus détaillée sur la figure 2.

Les télécopieurs 24 du type défini ci-dessus, bien connus de l'homme de l'art, comportent en plus du télécopieur proprement dit, indiqué en 24a, un commutateur incorporé 42 qui permet la connexion de la ligne d'abonné 28, soit au télécopieur, soit à une ligne extérieure locale 38, la position de repos étant celle qui relie les lignes 28 et 38. Dans le terminal de la figure 2, la ligne 38 est reliée à un commutateur 36 incorporé à l'écran-clavier 22, ce commutateur permettant la connexion de la ligne locale 38, soit à la partie écran-clavier proprement dite 22a, soit à une autre ligne locale 44 reliée à un combiné téléphonique ou un dispositif équivalent, référencé 40. De cette manière, lorsque ni l'écran-clavier 22, ni le télécopieur 24 ne sont en service, le combiné téléphonique 40 est relié directement à la ligne d'abonné 28.

On va maintenant considérer plus en détail le centre serveur 10 sur la figure 3 sous forme d'un schéma-bloc.

Il comprend un premier coupleur de ligne 50 destiné à assurer la connexion à la ligne 32 du réseau commuté 30, ce dernier pouvant être un réseau ordinaire ou un réseau spécialisé. Le premier coupleur de ligne 50 est relié à un commutateur de voies 52 qui est relié du côté opposé d'une part, à un premier modulateur-démodulateur 54 et d'autre part, à un composeur de numéros téléphoniques 56, tous ces circuits étant bien connus de l'homme de métier. Le modem 54 et le composeur 56 sont reliés à un commutateur numérotation/transmission de données 58 qui est relié d'autre part à un circuit de commande 60 appelé à gérer la partie considérée du serveur de messagerie, désignée par la référence 48. Le circuit de commande 60 est relié à la première banque de données 62.

Le serveur de messagerie comprend en outre un second coupleur de ligne 70 qui est relié à un second modulateur-démodulateur 72. Un circuit de commande 78 relie le modem 72 à la seconde banque de données 80. Il est appelé à gérer la partie considérée du serveur de messagerie, désignée par la référence 68.

Le fonctionnement du serveur de messagerie représenté sur la figure 3 est le suivant.

Lorsqu'un abonné disposant du terminal complexe représenté sur la figure 2 souhaite entrer en relation avec le serveur de messagerie 10, il soulève le combiné du poste téléphonique 40 et compose le numéro téléphonique correspondant à la partie "videotex" du serveur de messagerie. Les commutateurs 36 et 42 sont dans leur position de connexion directe du poste 40 à la ligne 28, et le réseau commuté assure la connexion avec la ressource "videotex" du serveur de messagerie, globalement désignée par la référence 48 sur la figure 3. Les commutateurs 52 et 58 de la ressource 48 sont, au repos, dans la position dans laquelle c'est le modulateur-démodulateur 54 qui est en circuit.

Le coupleur de voie 50 engendre alors une tonalité appropriée indiquant à l'abonné qu'il peut effectuer la connexion de l'écran-clavier 22, par exemple par enfoncement d'une touche appropriée, et raccrocher le combiné.

Un échange de données au format "videotex" peut alors avoir lieu entre le terminal annuaire 22 et la première banque de données 62 au même format par l'intermédiaire du réseau commuté 30, des deux modems et du circuit de gestion et de commande 60 de la ressource 48, qui gère les échanges de façon appropriée.

A la suite de ces échanges, va pouvoir avoir lieu une transmission de données au format "télécopie". La ressource videotex indique à l'abonné, par l'intermédiaire de l'écran-clavier 22, qu'il peut basculer son terminal sur le mode télécopie, par exemple en actionnant un commutateur approprié (tel que 42 sur la figure 2). Avant d'initier le changement de mode de transmission, l'abonné doit, en général, soulever le combiné du poste téléphonique 40 de façon à maintenir la connexion téléphonique pendant le basculement, préparer le télécopieur 24 (mise sous tension et mise en place du document à transmettre). Quand ces opérations sont achevées, l'abonné envoie vers le circuit de commande 60 de la ressource 48, une commande appropriée à l'aide de son écran-clavier. Sur réception de cette commande, la ressource videotex envoie à l'écran-clavier 22 un ordre de déconnexion, puis effectue le basculement des commutateurs 52 et 58 de manière à mettre maintenant hors circuit le modem 54 et en circuit le dispositif numéroteur 56. Elle commande alors ce dernier pour émettre vers le réseau un numéro d'appel de la ressource "télécopie", globalement désignée par la référence 68. De cette manière, lorsque le numéro d'appel est envoyé sur la ligne 32, il déclenche des trains de sonnerie sur la ligne 34 qui sont détectés au niveau du coupleur de ligne 70 de la ressource télécopie, puis le décrochement à ce même niveau, la ressource 68 est alors connectée au réseau commuté 30. Le dispositif numéroteur 56 est alors commandé par le circuit de commande 60 pour émettre vers le réseau un numéro de commande qui consiste en un suffixe transfert ou conférence.

Dans le cas où un suffixe conférence est émis, une communication à trois est établie, la ressource videotex 48 restant connectée, mais c'est la liaison entre le terminal et la ressource télécopie 68 qui est utilisée.

Une transmission de données selon le format télécopie peut alors avoir lieu entre le télécopieur 24 et la ressource télécopie 68 du serveur de messagerie. Le sens de cette transmission aura été préalablement déterminé lors de l'échange de données suivant la norme "videotex" entre l'abonné et le centre serveur. Dans le cas où c'est l'abonné qui envoie les données "télécopie" vers le centre serveur, ce dernier se placera de lui-même en mode réception après le décrochage, et l'abonné pourra, dès réception d'une tonalité spéciale de type "prêt à recevoir" depuis la ressource télécopie, commencer l'envoi de données par introduction des feuilles à télécopier dans le télécopieur 24.

Du côté du serveur, les données correspondantes seront stockées dans la banque de données 80 pour utilisation ultérieure, comme expliqué par la suite.

Il est bien connu qu'il existe plusieurs normes de transmission de données de type "télécopie" sur une ligne téléphonique. Les télécopieurs sont notamment répartis en trois groupes I, II et III. De façon avantageuse, l'échange de données en videotex préalable à tout transfert de données "télécopie" comportera une phase spécifiquement destinée à adapter les modalités d'émission ou de de réception, au niveau du centre serveur, au type de télécopieur à l'autre bout de la ligne.

Une fois que les données au format télécopie ont été échangées, la fin de l'échange étant sous l'initiative de celui qui est en mode émission et étant le cas échéant signalée à la ressource télécopie par envoi d'un message approprié, le circuit de commande 78 déclenche au niveau du coupleur de ligne 70 un ordre de raccrochage. Si la ressource "videotex" est restée connectée, un nouvel échange de données au format "videotex" peut avoir lieu entre l'abonné et le centre serveur.

On peut noter ici que, dans la structure de terminal telle que représentée sur la figure 2, le terminal annuaire 22 reprendra la main par simple basculement de son commutateur de ligne 36 à l'initiative de l'abonné à la fin de la transmission "télécopie". Mais il est bien entendu que l'on pourra organiser le terminal complexe d'abonné de telle sorte que la fin de la transmission en mode télécopie bascule automatiquement la ligne sur le terminal-annuaire.

Dans le cas où un suffixe "transfert" est émis à la place du suffixe "conférence" envisagé plus haut, dès que la ressource "télécopie" aura décroché, la ligne de la ressource "videotex" sera coupée. Cette configuration est intéressante d'une part, dans le cas où toutes les données d'une transaction considérée sont réglées une fois pour toutes dans le mode "videotex" qui précède la transmission "télécopie", et d'autre part, lorsqu'on souhaite libérer la ressource "videotex" considérée pendant la transmission en mode "télécopie", qui peut être assez longue. Dans ce dernier cas, s'il est nécessaire de reprendre la main en mode "videotex" après la transmission des informations de télécopie, on dotera la ressource "télécopie" 68 d'un dispositif composeur de numéros de téléphone, en association avec des moyens de commutation appropriés, de façon analogue à la ressource "videotex" 48. A la fin de la transmission en mode télécopie, la ressource considérée enverra alors sur le réseau, via son coupleur de ligne, un numéro d'appel d'une ressource "videotex" suivi d'un suffixe "transfert", pour basculer à nouveau la communication sur le mode "videotex" puis elle se libérera pour pouvoir recevoir d'autres appels.

On comprend donc qu'un avantage essentiel de la présente invention réside dans l'indépendance totale depuis l'extérieur entre la pluralité de ressources "videotex" et la pluralité des ressources "télécopie" d'un même centre serveur et, partant, dans la possibilité d'adapter, une fois pour toutes ou bien dynamiquement, le nombre des ressources de chaque type dans un même serveur de messagerie en fonction du trafic.

Par exemple, le centre serveur pourra proposer des prestations en mode "videotex" seul et, étant donné qu'un grand nombre d'abonnés ne disposent pas de télécopieur, le nombre de ressources "videotex" pourra être bien supérieur au nombre de ressources "télécopie".

En ce qui concerne l'allocation dynamique des ressources de types différents, on pourra prévoir, avec un nombre N déterminé de coupleurs de ligne permettant N accès simultanés au centre serveur de messagerie, des moyens de commutation pour affecter M ressources "videotex" et P ressources "télécopie" à ces coupleurs, avec M + P = N. En fonction du trafic réellement observé sur les ressources "videotex" et sur les ressources "télécopie", les valeurs de M et de P peuvent être modifiées indépendamment sous le contrôle de l'unité centrale du centre serveur, de façon à s'adapter au mieux à la demande des usagers.

Comme on l'a indiqué plus haut, des moyens de numérotation pourront être incorporés, soit aux ressources "videotex" seules, auquel cas le basculement entre les deux types de transmission s'effectue de préférence en mode "conférence", soit à toutes les ressources, ce qui permettra d'opérer, à chaque basculement, en mode "transfert" et de libérer la ressource devenant inutilisée pour un autre appel soit depuis l'extérieur, par un abonné, soit depuis le centre serveur.

En outre, le centre serveur pourra être équipé de moyens, bien connus de l'homme de métier, pour convertir des données de type "videotex" en données "télécopie". De la sorte, un usager dialoguant de façon classique avec un centre serveur en mode "videotex" pourra disposer à sa demande, sur le télécopieur incorporé à son terminal, d'une copie d'écran ("hard copy") permettant de sauvegarder les informations qui l'intéressent.

L'invention trouve son application principalement dans les systèmes de messagerie au format "télécopie". Par exemple, lorsqu'un abonné souhaite envoyer un même document à plusieurs destinataires par la voie de la télécopie (ce qui nécessite dans la technique antérieure autant de lectures du document et de communications qu'il y a de destinataires), il entre tout d'abord en relation avec le centre serveur suivant la norme "videotex", et un certain nombre d'étapes de dialogue sont effectuées, en particulier pour indiquer au serveur la liste de destinataires. La transmission est alors basculée sur le mode "téléscopie", et le document à transmettre est mémorisé dans la banque de données correspondante.

Le centre serveur peut, soit prendre l'initiative d'appeler les destinataires désignés pour leur transmettre le message mémorisé, et ce simultanément ou successivement selon la disponibilité des lignes d'accès au réseau (auquel cas chacun des terminaux devra être équipé de moyens de mise en marche à distance par la voie téléphonique, comme par exemple ceux qui sont décrits dans la demande de brevet français publiée n°2 568 075), soit attendre l'appel des abonnés considérés, venant consulter le serveur, pour leur indiquer lors de l'échange "videotex" qu'un ou plusieurs documents contenus dans la banque de données "télécopie" du serveur leur sont destinés.

En pratique, le centre serveur sera constitué par une unité de commande et de gestion principale, incorporant les deux circuits de commande 60 et 78 de la figure 3 (cette unité étant symbolisée sur la figure 3 par les traits pointillés de liaison 82), ainsi que par une mémoire commune 84 contenant les deux banques de données, donc les données "videotex" et les données "télécopie" mais aussi des informations complémentaires indiquant notamment :

- le nom de l'émetteur,
- la date et l'heure du dépôt,
- le nom du (ou des) destinataire(s) et
- le volume occupé par les données.

Bien entendu, la présente invention n'est nullement limitée à la forme de réalisation décrite ci-dessus et représentée sur les dessins, mais l'homme de l'art pourra y apporter toute modification ou variante conforme à son esprit.

En particulier, l'invention s'appliquera également tout à fait avantageusement à un serveur d'archivage de télécopies, à un serveur diffuseur de télécopies (services d'information...) ou encore à un centre de documentation informatisé.

Dans chaque cas, les dialogues au format "videotex" seront utilisés aux fins d'indentification, de sélection de l'information, de paiement du service, etc..

De plus, toutes les variantes de réalisation envisagées dans la demande de brevet français publiée n°2 528 998 mentionnée plus haut, pourront être mises en oeuvre dans la présente invention.

Enfin, bien que l'on ait envisagé tout au long de la description deux formats de données différents respectivement "videotex" et "télécopie", il est bien entendu que la présente invention ne se limite pas à ces deux types de formats, mais inclut dans son cadre tout format de données transmissible par ligne ordinaire ou spécialisée (à grande vitesse) d'un réseau, en particulier la voix.

La description de l'invention a été précédemment effectuée pour deux ensembles de ressources de type différent, mais l'invention n'est pas limitée à cet exemple et peut être étendue à un nombre quelconque d'ensembles de ressources de type différent.

D'autre part, on a précédemment décrit deux ressources de type différent appartenant à un même centre serveur.

Ce centre serveur peut être constitué d'entités réparties en des lieux géographiquement dispersés et reliées au réseau commuté.

## Revendications

1 - Procédé d'échange de données entre un terminal comprenant un premier et un second périphériques de type différent (22, 24) et un centre serveur (10) comprenant un premier et un second emsembles de ressources d'accès de type différent (16, 18), les deux périphériques et les deux ensembles de ressources fonctionnant respectivement sous un premier et un second formats de données différents, et dans lequel :

- on établit une communication, via une ligne d'un réseau commuté (30), entre le premier périphérique (22) et une ressource (16) du premier ensemble,

- on échange des données selon le premier format entre ledit premier périphérique et ladite ressource du premier ensemble,

- on établit la communication entre le second pérphérique (24) du terminal et une ressource (18) du second ensemble du centre serveur,

- on adapte les modalités d'échange de données entre ledit second périphérique (24) et ladite ressource du second ensemble (18), et

- on échange des données selon le second format entre ledit second périphérique (24) et ladite ressource du second ensemble (18), caractérisé en ce que l'étape d'établissement de la communication est effectuée par composition et envoi sur ladite ligne d'un numéro d'appel pour appeler une ressource du second ensemble (18) et, après connexion au réseau commuté (30) de ladite ressource du second ensemble (18), par composition et envoi sur ladite ligne d'un numéro de commande pour connecter ladite ligne sur ladite ressource du second ensemble (18).

2 - Procédé selon la revendication 1, caractérisé en ce que ledit numéro de commande est constitué par un suffixe de type "conférence", de telle sorte que ladite ressource du premier ensemble (16) garde la ligne et reprend la communication à la fin de l'étape d'échange de données selon le second format, le procédé comprenant en outre l'étape consistant à échanger à nouveau des données selon le premier format entre ledit premier périphérique (22) et ladite ressource du premier ensemble (16).

3 - Procédé selon la revendication 1, caractérisé en ce que le numéro de commande est constitué par un suffixe "transfert", de telle sorte que ladite ressource du premier ensemble (16) se libère de la ligne lors de l'étape de transfert.

4 - Procédé selon la revendication 3, caractérisé en ce qu'il comprend en outre, après l'étape d'échange de données selon le second format, une étape consistant à transférer la communication vers la ressource du premier ensemble par composition et envoi sur la ligne d'un numéro d'appel pour appeler une ressource du premier ensemble (16) et, après connexion au réseau commuté (30) de ladite ressource du premier ensemble (18), par composition et envoi sur la ligne d'un suffixe "transfert" pour transférer la ligne sur ladite ressource du premier ensemble.

5 - Procédé selon l'une quelconque des revendications 1 à 4, caractérisé en ce que les premier et second formats de données répondent respectivement à la norme "videotex" et à la norme "télécopie".

6 - Centre serveur de messagerie, susceptible d'échanger des données via un réseau commuté (30) avec des terminaux (20) comportant deux périphériques de types différents (22, 24) et comprenant deux ensembles de ressources d'accès de types différents (48, 68), les deux périphériques et les deux ensembles de ressources fonctionnant respectivement sous deux formats de données différents, caractérisé en ce que toutes les ressources sont reliées individuellement au réseau (30) et en ce qu'au moins les ressources du premier ensemble (48) comprennent des moyens numéroteurs (52, 56, 58) susceptibles d'envoyer sur le réseau un numéro d'appel d'une ressource de l'autre ensemble et un numéro de commande pour connecter la ligne sur cette dernière.

7 - Centre serveur selon la revendication 6, caractérisé en ce que seules les ressources du premier type (48) comprennent des moyens numéroteurs (52, 56, 58) et en ce que les numéros de commande envoyés par ces moyens consistent en un suffixe "conférence".

8 - Centre serveur selon la revendication 6, caractérisé en ce que toutes les ressources comprennent des moyens numéroteurs et en ce que les numéros de commande envoyés par ces moyens consistent en un suffixe "transfert".

0292355

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 528 998  (PERROT et al.)<br>* Page 1, lignes 1-27; page 3, lignes 1-3,24-29; page 4, lignes 1-25,32-36; page 5, lignes 8-21; page 15, lignes 4-9; figures 1,2 * | 1 | H 04 M  11/08 |
| A,D | --- | 3,5-7 | |
| Y | FR-A-2 555 843  (DUBRAY)<br>* Page 6, lignes 11-27; figure 1 * | 1 | |
| A | --- | 2 | |
| A | PATENT ABSTRACTS OF JAPAN, vol. 5, no. 198 (E-87)[870], 16 décembre 1981, page 155 E 87; & JP-A-56 122 554 (HITACHI SEISAKUSHO K.K.) 26-09-1981<br>* Abrégé * | 1,4 | |
| A | --- | | |
| A | GB-A-2 138 247  (NIHON RESUKO K.K.)<br>* Page 1, lignes 9-23; résumé *<br>----- | 1,4 | |

**DOMAINES TECHNIQUES RECHERCHES (Int. Cl.4)**

H 04 M

Le présent rapport a été établi pour toutes les revendications

| Lieu de la recherche | Date d'achèvement de la recherche | Examinateur |
|---|---|---|
| LA HAYE | 02-08-1988 | DE LA FUENTE DEL AGUA P. |